# EUROPÄISCHE PATENTSCHRIFT

(11) **EP 0 383 957 B1**
(45) Veröffentlichungstag und Bekanntmachung des Hinweises auf die Patenterteilung: **12.10.1994**
(21) Anmeldenummer: 89101432.6
(22) Anmeldetag: 27.01.1989
(51) Int. Cl.: G11B 5/584

(54) **Verfahren und Anordnung zum Positionieren eines Magnetkopfes eines Magnetschichtspeichers**
Process and disposition for positioning a magnetic head of a magnetic layer memory
Procédé et dispositif pour le positionnement d'une tête magnétique d'une mémoire à couches magnétiques

(43) Veröffentlichungstag der Anmeldung: 29.08.1990
(73) Patentinhaber: TANDBERG DATA A/S, 0808 Oslo 8 (NO)
(72) Erfinder: Guttorm, Rudi, N-1472 Fjellhamar (NO)
(74) Vertreter: Goddar, Heinz J., Dr.

(56) Entgegenhaltungen:
- EP-A- 0 032 660
- WO-A-86/06862
- PATENT ABSTRACTS OF JAPAN Band 8, Nr. 38 (P-255)(1475) 18. Februar 1984; & JP - A - 58 189877 (SONY K.K.) 05.11.1983
- PATENT ABSTRACTS OF JAPAN Band 9, Nr. 109 (P-355)(1832) 14. Mai 1985; & JP - A - 59 231731 (SONY K.K.) 26.12.84
- PATENT ABSTRACTS OF JAPAN Band 9, Nr. 48, (P-338)(1771) 28.Februar 1985; & JP - A - 59 185020 (SONY K.K.) 20.10.1984

## Beschreibung

Die Erfindung bezieht sich auf ein Verfahren zum Positionieren eines kombinierten Magnetkopfes eines Magnetschichtspeichergerätes gemäß dem Oberbegriff des Patentanspruches 1. Weiterhin bezieht sich die Erfindung auf eine Anordnung zur Durchführung dieses Verfahrens.

Aus EP-A1-0 276 451 ist ein derartiges Verfahren zum genauen Positionieren eines Magnetkopfes eines Magnetschichtspeichergerätes bereits bekannt. Bei diesem bekannten Verfahren wird zum Bewegen des Magnetkopfes senkrecht zur Bewegungsrichtung des als Magnetband ausgebildeten Aufzeichnungsträgers ein Schrittmotor verwendet. Zum Steuern des Schrittmotors wird zu einem Positionswert, der jeweils einer Spur des Aufzeichnungsträgers zugeordnet ist, ein Korrekturwert hinzuaddiert, der dem Versatz zwischen einem Schreibkopf und einem Lesekopf des Magnetkopfes längs einer Spur des Aufzeichnungsträgers entspricht. Mit Hilfe dieses bekannten Verfahrens kann eine genaue Positionierung insbesondere dann erreicht werden, wenn in dem Magnetkopf der Schreib- und Lesekopf oder die Schreib- und Leseköpfe längs einer Spur nicht genau ausgerichtet sind oder wenn der Magnetkopf selbst nicht genau justiert ist.

Bei der Aufzeichnung von Datensignalen auf einen Aufzeichnungsträger ist die Anzahl der Spuren von großer Bedeutung für die Speicherdichte. Es ist daher sehr wichtig, möglichst viele Spuren auf einem Aufzeichnungsträger, beispielsweise einem Magnetband, unterzubringen. Eine hohe Spurdichte kann jedoch nur dann erreicht werden, wenn eine hohe Positioniergenauigkeit gegeben ist.

Die englischsprachige Zusammenfassung der JP-A-59-185 020, veröffentlicht in Japanese Abstracts, Vol. 9, Nr. 48 (P-338) [1771] am 28. Februar 1985, beschreibt einen im Stand der Technik allgemein üblichen, relativ aufwendigen Justierprozeß für einen Magnetkopf.

Dabei wird zunächst eine Grobeinstellung vorgenommen, wobei Magnetköpfe in beiden Kantenbereichen eines Bandes angeordnet werden, indem die entsprechende Aufzeichnungseinrichtung vertikal zur Laufrichtung des Bandes bewegt wird. Dann wird das Band laufengelassen und den Köpfen ein Referenzsignal aufgegeben, so daß, wiederum im Bereich beider Bandkanten, Referenzspuren erzeugt werden. Dieses Referenzsignal wird durch weitere Köpfe, die zu positionieren sind, derart reproduziert, daß ein identischer Wiedergabewert erzielt wird. Ausgerichtet mit den bereits erwähnten Hilfsköpfen sind Aufzeichnungs- und Wiedergabeköpfe, die auf diese Weise in bezug auf die Mittellinie des Bandes positioniert werden. Das Aufzeichnen wird bewirkt, indem einem entsprechenden Kopf ein Aufzeichnungssignal aufgegeben wird, und dieses Signal wird von einem Wiedergabekopf, während eine Spur gebildet wird, reproduziert. Die Magnetkopfeinrichtung wird dann so ausgerichtet, daß die Reproduktionswerte zweier Aufzeichnungsköpfe wiederum gleich sind. Auf diese Weise wird die Mittellinie der gerade erzeugten Spur auf die Mittellinie des Bandes ausgerichtet. Die Aufzeichnungsköpfe und die Wiedergabeköpfe sind damit in der genauen gewünschten wechselseitigen Position.

Auf ähnliche Weise verwendet das Bandgerät, das in der englischsprachigen Zusammenfassung der JP-A-59-231 731, veröffentlicht in Japanese Abstracts Vol. 9, Nr. 109 (P-355) [1832] am 14. Mai 1985, einen Hilfskopf, der an einer Seite eines Bandes eine Hilfsspur erzeugt, die vorgegebene Referenzsignale trägt. Dem ersten Hilfskopf sind die Aufzeichnungsköpfe zugeordnet, einem zweiten Hilfskopf, der so angeordnet ist, daß er wiederum mit dem gleichen Wert reproduziert, sind die Wiedergabeköpfe zugeordnet.

Schließlich ist auch in der englischen Zusammenfassung zur JP-A-58-189 877, veröffentlicht in Japanese Abstracts, Vol. 8, Nr. 38 (P-255) [1475] am 18. Februar 1984 ein Spurhaltesystem beschrieben, mit dem ein mäanderartiger Bandlauf ausgeglichen werden soll. Dabei erfassen entsprechende Köpfe die obere und untere Hälfte einer Hilfsspur, die mittig in dem Band angeordnet ist und positionieren die Aufzeichnungs- bzw. Wiedergabeanordnung so, daß die von der oberen bzw. der unteren Hälfte der Hilfsspur reproduzierten Werte gleich sind.

Es ist die Aufgabe der Erfindung, ein Verfahren der eingangs genannten Art und eine Anordnung zur Durchführung des Verfahrens anzugeben, bei deren Verwendung eine besonders genaue Positionierung des kombinierten Magnetkopfes bezüglich der einzelnen Spuren des Aufzeichnungsträgers erreicht wird.

Erfindungsgemäß wird diese Aufgabe bei dem Verfahren der eingangs genannten Art durch die im Patentanspruch 1 angegebenen Verfahrensschritte gelöst. Eine Anordnung zur Durchführung des Verfahrens ist im Patentanspruch 5 angegeben.

Das Verfahren gemäß der Erfindung hat den Vorteil, daß der Magnetkopf relativ zu einer bereits festgelegten Referenz positioniert werden kann und diese Positionierung von Ungenauigkeiten bei der Bewegung des Aufzeichnungsträgers weitestgehend unabhängig ist. Der Abstand der Spuren entspricht dem Abstand eines insbesondere einen Rand einer Bezugsspur abtastenden Hilfslesekopfes von einem Schreibkopf und/oder einem Lesekopf. Dieser Abstand ist durch den Aufbau des kombinierten Magnetkopfes fest vorgegeben und kann sehr klein ausgebildet werden.

Als Bezugsspur kann eine auf dem Aufzeichnungsträger bereits vorhandene Spur mit Datensignalen oder eine einer Kante des Aufzeichnungsträgers zugeordnete Spur verwendet werden.

Der Magnetkopf kann neben einem ersten Hilfslesekopf, der einen Rand der Bezugsspur abtastet, mindestens einen weiteren Hilfslesekopf enthalten, der den anderen Rand der Bezugsspur zusätzlich abtastet.

Als Aufzeichnungsträger ist vorzugsweise ein Magnetband, insbesondere ein in einer Kassette untergebrachtes Magnetband vorgesehen.

Eine Anordnung zur Durchführung des Verfahrens umfaßt einen kombinierten Magnetkopf, der neben mindestens einem Schreibkopf und/oder mindestens einem Lesekopf mindestens einen Hilfslesekopf aufweist sowie eine Steuereinheit, die den Magnetkopf derart steuert, daß der Hilfslesekopf jeweils einer Bezugsspur, die entsprechend dem Verfahren definiert ist, möglichst genau folgt.

Die Breite des Hilfslesekopfes ist wesentlich geringer als diejenige des Schreibkopfes oder des Lesekopfes und es wird durch den Hilfslesekopf vorzugsweise ein Rand der Bezugsspur abgetastet. Falls zwei Hilfsleseköpfe vorgesehen sind, können diese jeweils einen der beiden Ränder der Bezugsspur abtasten. Bei einem Mehrspurkopf können die Hilfsleseköpfe auch verschiedenen Spuren zugeordnet sein.

Die Steuereinheit ist vorzugsweise als Mikrorechner ausgebildet.

Das Verfahren gemäß der Erfindung sowie eine Ausführungsform einer Anordnung zur Durchführung des Verfahrens werden im folgenden anhand der Zeichnung näher erläutert. Dabei zeigt:
FIG 1 eine schematische Darstellung einer Aufzeichnung von Signalen auf einem Aufzeichnungsträger unter Verwendung einer Randspur als Bezugsspur für einen kombinierten Magnetkopf,
FIG 2 eine schematische Darstellung einer Aufzeichnung von Signalen auf dem Aufzeichnungsträger unter Verwendung einer aus aufgezeichneten Datensignalen gebildeten Spur als Bezugsspur für den Magnetkopf,
FIG 3 eine Darstellung eines einspurigen Magnetkopfes, der einen Hilfslesekopf aufweist,
FIG 4 eine Darstellung eines mehrspurigen Magnetkopfes mit mehreren Hilfsleseköpfen und
FIG 5 ein Blockschaltbild einer bevorzugten Ausführungsform einer Anordnung zur Durchführung des Verfahrens.

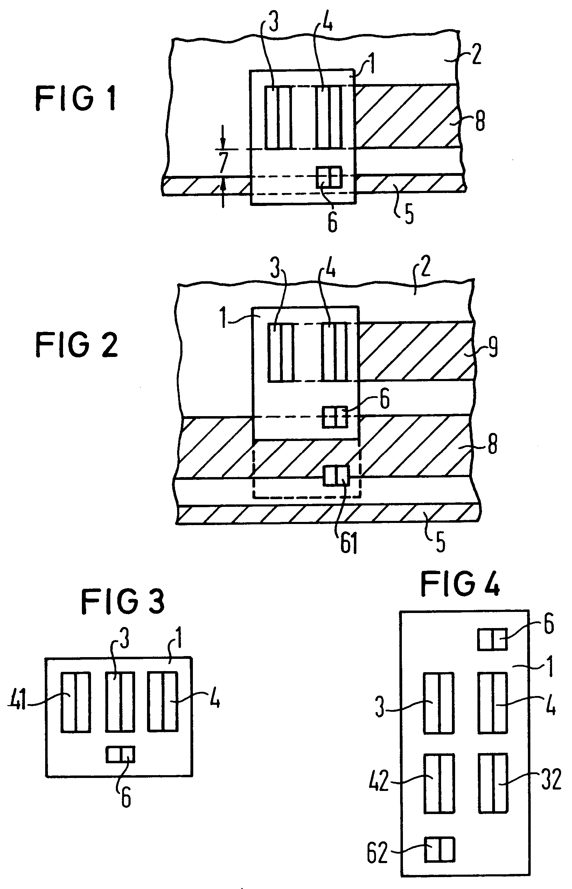

Bei der in FIG 1 gezeigten Darstellung werden unter Verwendung eines kombinierten Magnetkopfes 1 Signale, beispielsweise Datensignale, auf einem Aufzeichnungsträger, insbesondere einem Magnetband 2, aufgezeichnet oder von diesem wiedergegeben. Das Aufzeichnen erfolgt mittels eines Schreibkopfs 3, für die Wiedergabe wird ein Lesekopf 4 eingesetzt.

Beim Aufzeichnen oder beim Wiedergeben der Daten wird zunächst die Kante des Magnetbandes 2 ermittelt. Dies kann beispielsweise auf eine Weise geschehen, die in US-PS 4,476,503 näher beschrieben ist. Hierzu wird der kombinierte Magnetkopf 1 soweit in einer Richtung senkrecht zur Bewegungsrichtung des Magnetbandes 2 bewegt, bis der Schreibkopf 3 nicht mehr das Magnetband 2 bedeckt. Der Magnetkopf 1 wird dann in der entgegengesetzten Richtung bewegt, gleichzeitig werden ihm Aufzeichnungssignale zugeführt. Solange der Schreibkopf 3 noch nicht mit dem Magnetband 2 in Berührung kommt, werden auf diesem keine Signale aufgezeichnet und der Lesekopf 4 erzeugt auch keine Wiedergabesignale. Sobald jedoch der Schreibkopf 3 über das Magnetband 2 zu liegen kommt, wird eine Randspur 5 auf das Magnetband 2 aufgezeichnet. Gleichzeitig liest der Lesekopf 4 Signale vom Magnetband 2. Eine mit dem Lesekopf 4 verbundene Steuereinheit erkennt in Abhängigkeit von einem Schwellenwert, der von einer entsprechenden Breite dieser Randspur 5 abgeleitet ist, die Kante des Magnetbandes 2. Wird der Magnetkopf 1 in dieser Position senkrecht zur Bewegungsrichtung des Magnetbandes 2 festgehalten und wird dieses weiterhin in seiner Längsrichtung bewegt, so kann längs des gesamten Magnetbands 2 eine derartige Randspur 5 aufgezeichnet werden.

Nach dem Aufzeichnen der Randspur 5 erfolgt das Aufzeichnen der Datensignale. Der Magnetkopf 1 wird hierzu senkrecht zur Bewegungsrichtung des Magnetbandes 2 solange bewegt, bis eine Steuereinheit, die mit der oben erwähnten Steuereinheit identisch sein kann, unter Verwendung eines in dem Magnetkopf 1 vorgesehenen Hilfslesekopfes 6 den von der Kante des Magnetbandes 2 abgewandten Rand der Randspur 5 erkennt. Der Hilfslesekopf 6 weist dazu in Querrichtung des Magnetbandes 2 eine Breite auf, die vorzugsweise wesentlich geringer ist als die Breite des Schreibkopfes 3 und/oder des Lesekopfes 4. Das Erkennen des Rands der Randspur 5 kann in ähnlicher Weise erfolgen wie das Erkennen der Kante des Magnetbandes 2, nämlich durch das Über- oder Unterschreiten eines Schwellenwertes bezüglich der von dem Hilfslesekopf 6 wiedergegebenen Signale. Die Steuereinheit steuert dann beim anschließenden Aufzeichnen der Datensignale den Magnetkopf 1 derart, daß der Hilfslesekopf 6 immer dem Rand der Randspur 5 als Bezugsspur folgt, wenn das Magnetband 2 in seiner Längsrichtung bewegt wird. Hierzu wird der Magnetkopf 2 senkrecht zur Bewegungsrichtung des Magnetbandes 1 unter Verwendung eines in der Steuereinheit vorgesehenen Regelkreises gesteuert. Ein weiterer Hilfslesekopf kann oberhalb des Lesekopfes 4 angeordnet sein, um auch Daten in einem vorgegebenen Abstand von einer oberhalb des Lesekopfes 4 angeordneten Bezugsspur abtasten zu können.

Zwischen dem Hilfslesekopf 6 und dem Schreibkopf 3 bzw. dem Lesekopf 4 ist ein vertikaler Abstand 7 vorgegeben, der beispielsweise von der Mitte des Hilfslesekopfes 6 zum unteren Rand des Schreibkopfes 3 bzw. des Lesekopfes 4 gemessen wird und beispielsweise gleich ist der doppelten Breite des Hilfslesekopfes 6. Wenn der Hilfslesekopf 6 dem Rand der Bezugsspur 5 folgt, wird beim Aufzeichnen der Datensignale eine neue Spur 8 erzeugt, die von der Bezugsspur 5 den Abstand 7 aufweist. Der Abstand 7 wird möglichst klein gemacht, so daß eine hohe Spurdichte auf dem Magnetband 2 erreicht.

Beim Wiedergeben der auf dem Magnetband 2 aufgezeichneten Datensignale kann der Magnetkopf 2 in gleicher Weise wie beim Aufzeichnen der Datensignale gesteuert werden, so daß der Lesekopf 4 ebenfalls immer im Abstand 7 der Bezugsspur 5 folgt. Damit ist sichergestellt, daß der Lesekopf 4 immer genau der Mitte der Spur 8 mit den aufgezeichneten Datensignalen zugeordnet ist.

Anstelle der Randspur 5 kann auch eine andere auf dem Magnetband 2 zuvor aufgezeichnete Spur als Bezugsspur verwendet werden, um Datensignale auf einer weiteren Spur aufzuzeichnen oder von dieser Spur zu lesen. Auch in diesem Fall ist sichergestellt, daß eine hohe Spurdichte erreicht wird, da auch dann der Schreibkopf 3 bzw. der Lesekopf 4 immer in dem Abstand 7 der Bezugsspur folgt.

Bei dem Aufzeichnen weiterer Spuren wird, wie es in FIG 2 dargestellt ist, jeweils eine andere (vorher aufgezeichnete) Spur als Bezugsspur verwendet. Beispielsweise ist die zuvor aufgezeichnete Spur 8 die neue Bezugsspur, um im Abstand 7 jeweils eine neue Spur 9 in derselben Weise aufzuzeichnen oder von dieser zu lesen, wie es oben angegeben ist.

In FIG 2 ist weiterhin in unterbrochenen Linien dargestellt, daß der kombinierte Magnetkopf 1 noch einen weiteren Hilfslesekopf 61 enthalten kann, der den anderen Rand einer zuvor aufgezeichneten Spur 8 abtastet. Das Abtasten des anderen Rands erfolgt mittels des Hilfeslesekopfes 61 in ganz ähnlicher Weise wie mittels des Hilfslesekopfes 6. Die Steuereinheit verwendet in diesem Fall die wiedergegebenen Signale dieser beiden Hilfsleseköpfe 6 und 61, um sicherzustellen, daß der Schreibkopf 3 und der Lesekopf 4 immer einen vorgegebenen Abstand von der Mitte der Spur 8 aufweisen.

Falls das Magnetbandgerät nicht mit einer Steuereinheit zum Erkennen der Kante des Magnetbandes 2 ausgestattet ist, kann die erste Spur in bekannter Weise ohne die Verwendung einer Bezugsspur 5 aufgezeichnet werden. In diesem Fall folgt dann der Hilfslesekopf 6 beim Aufzeichnen einer zweiten Spur dem Rand der bereits aufgezeichneten Spur.

Anstelle des Rands oder der Ränder kann auch die gesamte Bezugsspur 5 bzw. 8 abgetastet werden. Aus dem Maximalwert der Lesesignale ergibt sich dann die Mitte dieser Bezugsspur 5 bzw. 8. Diese Mitte dient dann anstelle des Randes als Bezugswert für das Aufzeichnen einer Spur mit den Datensignalen.

In FIG 3 ist ein kombinierter Magnetkopf 1 dargestellt, der für ein Kontrollesen, d. h. für ein Lesen unmittelbar zuvor aufgezeichneter Daten in beiden Richtungen längs des Magnetbandes 2 geeignet ist. Der Magnetkopf 1 ist zu diesem Zweck mit zwei Leseköpfen 4 bzw. 41 ausgestattet, die zu beiden Seiten des Schreibkopfes 3 angeordnet sind. Beim Schreiben in Vorwärtsrichtung werden, analog zu der Darstellung in FIG 1, die Datensignale unter Verwendung des Schreibkopfes 3 aufgezeichnet. Die aufgezeichneten Datensignale werden unmittelbar danach durch den Lesekopf 4 gelesen, um zu überprüfen, ob sie richtig aufgezeichnet wurden. Bei einer Aufzeichnung der Daten in Rückwärtsrichtung erfolgt, in ähnlicher Weise wie bei der zuvor beschriebenen Aufzeichnung in Vorwärtsrichtung, ein Kontrollesen, in diesem Fall jedoch unter Verwendung des Lesekopfes 41. Auch bei dieser Ausführung des Magnetkopfes 1 ist mindestens ein Hilfslesekopf 6 vorgesehen, der vorzugsweise unterhalb des Schreibkopfes 3 angeordnet ist. Er steuert beim Aufzeichnen und/oder beim Wiedergeben der Datensignale die genaue Position des Schreibkopfes 3 und der Leseköpfe 4 und 41. Auch hier kann zusätzlich ein weiterer Hilfslesekopf oberhalb des Schreibkopfes 3 angeordnet sein.

Der in FIG 4 dargestellte kombinierte Magnetkopf 1 ist als ein Mehrspurkopf ausgebildet und weist zwei, aus jeweils einem Schreibkopf 3 bzw. 32 und einem Lesekopf 4 bzw. 42 gebildete Kopfpaare auf. Unterhalb sowie oberhalb der Leseköpfe 4 und 42 ist jeweils ein Hilfslesekopf 6 bzw. 62 angeordnet. Der Hilfslesekopf 6 stellt beim Aufzeichnen und Wiedergeben in der einen Bandlaufrichtung sicher, daß der Schreibkopf 3 und der Lesekopf 4 einer jeweiligen, zuvor aufgezeichneten und durch ihn abgetasteten Bezugsspur in einem kleinen Abstand folgen, während der Hilfslesekopf 62 diese Aufgabe für den Schreibkopf 32 und den Lesekopf 42 übernimmt. Auch mit diesem Magnetkopf 1 kann ein Kontrollesen beim Aufzeichnen in Vorwärts- bzw. Rückwärtsrichtung durchgeführt werden, da die Leseköpfe 4 und 42 jeweils in Aufzeichnungsrichtung hinter dem Schreibkopf 3 bzw. 32 angeordnet sind.

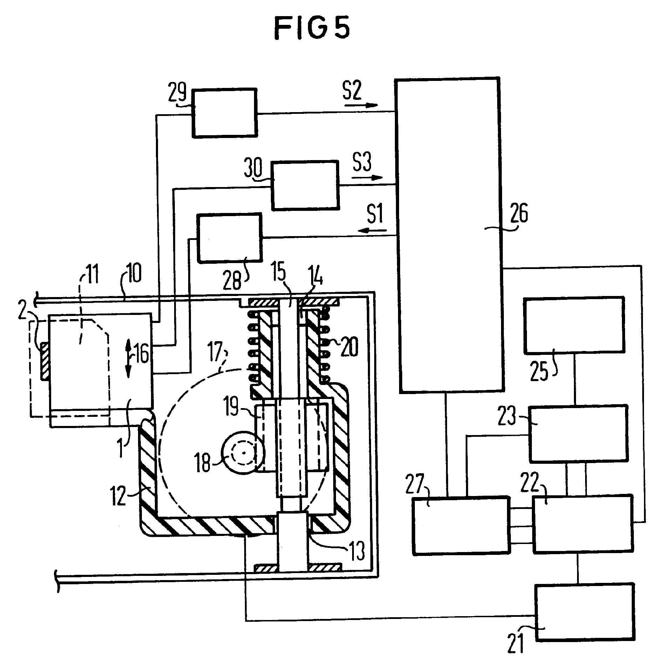

Die in FIG 5 dargestellte Anordnung zur Durchführung des Verfahrens zeigt einen Ausschnitt aus einem Magnetbandgerät, das beispielsweise als Kassettenmagnetbandgerät ausgebildet ist. Ein derartiges Magnetbandgerät ist beispielsweise den US-A-4,609,959 oder US-A-4,622,606 zu entnehmen. In einem Gehäuse 10 des Magnetbandgerätes sind eine nicht dargestellte Antriebsanordnung für das als Aufzeichnungsträger dienende Magnetband 2 und eine Positionieranordnung für den Magnetkopf 1 angeordnet. Eine gestrichelt dargestellte Magnetbandkassette 11 mit dem Magnetband 2 ist in das Magnetbandgerät einsetzbar. Der Magnetkopf 1 greift während des Betriebs des Magnetbandgeräts in eine nicht dargestellte Öffnung der Kassette 11 ein, um mit dem Magnetband 2 in Berührung zu kommen. Der Magnetkopf 1 ist auf einem Kopfträger 12 befestigt, der zum Positionieren des Magnetkopfes gemeinsam mit diesem unter Verwendung von zwei Lagern 13 und 14 längs einer Achse 15 in Querrichtung des Magnetbandes 2 verschiebbar ist, wie durch den Doppelpfeil 16 angegeben ist.

Die Verschiebung des Kopfträgers 12 mit dem Magnetkopf 1 erfolgt durch einen Elektromotor 17, der vorzugsweise als Schrittmotor ausgebildet ist, jedoch auch als Gleichstrommotor ausgebildet sein kann. Auf der Achse des Motors 17 ist eine Schnecke 18 befestigt, die mit einem Schneckenrad 19 in Wirkverbindung steht. Die Achse 15 weist im Bereich des Schneckenrads 19 ein Außengewinde auf, das mit einem Innengewinde des Schneckenrads 19 zusammenwirkt. Wenn die Schnecke 18 durch den Elektromotor 17 angetrieben wird, so treibt diese das Schnekkenrad 19 an und damit bewegt sich dieses in axialer Richtung längs der Achse 15. Eine Druckfeder 20 drückt den Kopfträger 12 gegen das Schneckenrad 19, so daß dieser der Bewegung des Schneckenrades 19 in axialer Richtung folgt und damit den Magnetkopf 1 auf verschiedene Spuren des Magnetbands 2 positioniert. Während der Bewegung des Kopfträgers 12 in axialer Richtung wird verhindert, daß dieser sich mit der Drehung des Schneckenrads 19 drehen kann. Während des Einschiebens oder des Herausnehmens der Kassette 11 ist der Magnetkopf 1 gemeinsam mit dem Kopfträger 12 aus der Arbeitsstellung in eine Ruhestellung schwenkbar.

Der Motor 17 erhält von einer Motorsteuerung 21 Steuersignale, die beispielsweise als Schrittimpulse ausgebildet sind, wenn der Motor 17 ein Schrittmotor ist. Die Motorsteuerung 15 wird von einem Impulsgeber 22 angesteuert, der beim Positionieren eines Schreibkopfes oder eines Lesekopfes auf eine bestimmte Spur des Magnetbandes 2 Steuersignale empfängt, um von einer Istposition, beisielsweise einer bestimmten Spur auf eine Sollposition, beispielsweise eine andere Spur zu gelangen. Eine derartige Positioniereinrichtung ist allgemein bekannt und beispielsweise der US-PS 4,313,141 zu entnehmen.

Eine bestimmte Spur, auf die ein Schreibkopf oder Lesekopf positioniert werden soll, wird von einer zentralen Steuereinheit des Magnetbandgerätes oder einer als Mikrorechner ausgebildeten Steuereinheit 26 mitgeteilt. Die Istposition, in der sich der Magnetkopf 1 jeweils befindet, ist in einem Speicher 23 gespeichert oder kann ebenfalls in dem Mikrorechner 26 gespeichert sein.

Zu Beginn des Betriebs des Magnetbandgeräts wird der Magnetkopf 1 in eine Bezugsposition gebracht, die durch einen Bezugspositionsgeber 25 ermittelt wird. Diese Bezugsposition ist beispielsweise eine Kante des Magnetbandes 2, die durch das Verfahren ermittelt wird, das in der bereits erwähnten US-PS 4,476,503 beschrieben ist. Die Bezugsposition kann auch eine erste, beispielsweise äußere oder mittlere Spur des Magnetbandes 2 sein. Die Bezugsposition kann aber auch, wie in der US-PS 4,313,141 beschrieben ist, eine bestimmte Stellung der Positionseinrichtung sein, die mittels einer Lichtschranke erkannt wird. Diese Bezugsposition ist dann bei Inbetriebnahme die Istposition und ist in dem Speicher 23 gespeichert.

Der Mikrorechner 26 enthält einen Zuordner, der den Sollpositionswert einer jeweils einzunehmenden Spur in Abhängigkeit von der jeweiligen Spurnummer enthält. Sowohl der vom Zuordner abgegebene Sollpositionswert als auch der vom Speicher 25 abgegebene Istpositionswert werden einem Vergleicher 27 zugeführt, der aus der Differenz zwischen dem Soll- und dem Istpositionswert den Abstand sowohl hinsichtlich des Betrags als auch hinsichtlich der Richtung ermittelt und den Impulsgeber 22 veranlaßt, an die Motorsteuerung solange Impulse für den Schrittmotor 17 abzugeben, bis der Sollpositionswert mit dem Istpositionswert übereinstimmt. Der Magnetkopf 1 wird damit unter Verwendung des Motors 17 auf die gewünschte Spur positioniert. Gleichzeitig werden die Impulse dem Speicher 23 zugeführt, so daß dieser die neue Istposition beinhaltet. Der Speicher 23 kann zu diesem Zweck einen Addierer enthalten, der von der alten Istposition jeweils die entsprechende Anzahl von Impulsen subtrahiert oder zu dieser hinzuaddiert. Er kann auch als Zähler ausgebildet sein, dessen Zählerstand die jeweilige Istposition angibt und der durch die vom Impulsgeber 22 abgegebenen Impulse jeweils aufwärts oder abwärts gezählt wird.

Wie bereits erwähnt, kann der Motor 17 auch ein Gleichstrommotor sein. Zur genauen Positionierung kann dann auf der Achse des Gleichstrommotors eine Taktscheibe angeordnet sein, bei der eine Vielzahl von Markierungen durch optoelektronische Elemente abgetastet wird. In diesem Fall gibt der Impulsgeber 22 an die Motorsteuerung 21 solange Signale ab, bis eine vorgegebene Anzahl von Taktimpulsen abgetastet wurde, die der Differenz zwischen der Soll- und der Istposition entspricht.

Die Steuereinheit 26 dient auch dazu, die Position des Hilfslesekopfes 6 derart zu steuern, daß dieser immer der Bezugsspur 5 bzw. 8 folgt. Zu diesem Zweck umfaßt die Steuereinheit 26 einen Regelkreis, der den Motor 17 immer derart steuert, daß der Hilfslesekopf 6 immer genau dem Rand der Bezugsspur 5 oder 8 folgt.

Wie bereits erwähnt, wird zu Beginn des Betriebs des Magnetbandgeräts der Magnetkopf 1 in eine Bezugsposition gebracht, die beispielsweise der Kante des Magnetbandes 2 zugeordnet ist. In dieser Bezugsposition wird, wie im Zusammenhang mit FIG 1 beschrieben wurde, die Bezugsspur 5 auf das Magnetband 2 aufgezeichnet.

Für das Aufzeichnen der ersten Spur mit Datensignalen auf das Magnetband 2 wird dann, gegebenenfalls nach einem Rückspulvorgang, der Magnetkopf 1 auf die gewünschte Spur positioniert. Die Positionierung erfolgt dabei derart, daß der Hilfslesekopf 6 ungefähr auf dem der Kante des Magnetbandes 2 abgewandten Rand der Bezugsspur 5 zu liegen kommt. Für eine anschließende Feinpositionierung wird der Magnetkopf 1 derart gesteuert, daß der Hilfslesekopf 6 dem Rand der Bezugsspur 5 bei der Bewegung des Magnetbandes 2 möglichst genau folgt. Gleichzeitig werden dann den Datensignalen zugeordnete Schreibsignale S1 über einen Schreibverstärker 28 dem Schreibkopf 3 zugeführt. Zur Feinpositionierung werden vom Hilfslesekopf 6 abgegebene Lesesignale über einen Leseverstärker 29 als Signale S2 der Steuereinheit 26 zugeführt. Diese vergleicht die Signale S2 mit einem Schwellenwert und steuert unter Verwendung des erwähnten Regelkreises den Motor 17 derart, daß er immer dem Rand der Bezugsspur 5 folgt. Auf diese Weise wird eine hohe Genauigkeit bei der Positionierung erreicht, so daß die Spurdichte erhöht werden kann.

Für das Schreiben der weiteren Spuren wird dann die jeweils benachbarte Spur als Bezugsspur 8 verwendet, wie es im Zusammenhang mit FIG 2 beschrieben wurde. Auch hier steuert die Steuereinheit 26 die Position des Magnetkopfes 1 dadurch, daß der Hilfslesekopf 6 dem Rand der Bezugsspur möglichst genau folgt.

Für das Lesen von Daten vom Magnetband 2 gilt entsprechendes wie beim Schreiben. Auch hier wird der Magnetkopf 1 zunächst in bekannter Weise grob auf die jeweilige Spur positioniert und dann anschließend unter Verwendung des Hilfslesekopfes 6 fein positioniert. Der Lesekopf 4 gibt in diesem Fall Lesesignale ab, die über einen Leseverstärker 30 als Signale S3 der Steuereinheit 26 zur Auswertung zugeführt werden.

Falls keine Einrichtung zum Erkennen der Kante des Magnetbandes 2 vorgesehen ist, wird bei der Aufzeichnung von Datensignalen die erste Spur mit Datensignalen in herkömmlicher Weise aufgezeichnet und diese dann bei der Aufzeichnung weiterer Spuren als Bezugsspur 8 verwendet. Die folgenden Spuren werden dann dadurch aufgezeichnet, daß jeweils eine andere, zuvor aufgezeichnete Spur mit Datensignalen als Bezugsspur 8 verwendet wird. Entsprechendes gilt für das Lesen der Datensignale. Falls nur eine Spur auf dem Magnetband 2 aufgezeichnet wurde, bedarf es nur einer Bezugsspur 5, andernfalls wird jeweils eine andere, vorzugsweise die zuletzt gelesene Spur als neue Bezugsspur 8 verwendet.

## Patentansprüche

1. Verfahren zum Positionieren eines kombinierten Magnetkopfes (1) eines Magnetschichtspeichergerätes in einer Richtung senkrecht zur Bewegungsrichtung eines magnetischen Aufzeichnungsträgers (2), wobei der Magnetkopf mindestens einen Schreibkopf (3) zum Aufzeichnen von Datensignalen auf dem Aufzeichnungsträger und mindestens einen Lesekopf (4) zum Wiedergeben gespeicherter Datensignale enthält, gekennzeichnet durch folgende Schritte:
a) Der Magnetkopf (1) wird derart positioniert, daß mindestens ein Hilfslesekopf (6), der zum Schreibkopf (3) und/oder zum Lesekopf (4) in einem festen Abstand (7) senkrecht zur Bewegungsrichtung des Aufzeichnungsträgers (2) angeordnet ist, jeweils eine Bezugsspur (5, 8) abtastet und dieser während der Bewegung des Aufzeichnungsträgers (2) folgt,
b) während der Bewegung des Aufzeichnungsträgers (2) werden mittels des Schreibkopfes (3) die Datensignale aufgezeichnet oder mittels des Lesekopfes (4) wiedergegeben, wobei beim ersten Durchlauf als Bezugsspur (5) eine Spur verwendet wird, die Information über die Kante des Aufzeichnungsträger (2) enthält während bei weiteren Durchläufen als Bezugsspur (8) auf dem Aufzeichnungsträger (2) eine Spur mit aufgezeichneten Datensignalen verwendet wird.

2. Verfahren nach Anspruch 1, dadurch gekennzeichnet, daß mittels des Hilfslesekopfes (6) ein Rand der Bezugsspur (5, 8) abgetastet wird.

3. Verfahren nach Anspruch 1 oder 2, dadurch gekennzeichnet, daß mittels eines weiteren Hilfslesekopfes (61) der andere Rand der Bezugsspur (8) abgetastet wird.

4. Verfahren nach einem der Ansprüche 1 bis 3, dadurch gekennzeichnet, daß als Magnetschichtspeichergerät ein Magnetbandgerät und daß als Aufzeichnungsträger ein Magnetband (2) verwendet wird.

5. Anordnung zur Durchführung des Verfahrens nach einem der Ansprüche 1 bis 4, wobei in dem Magnetschichtspeichergerät eine Steuereinheit (26) zum Positionieren des kombinierten Magnetkopfes (1) senkrecht zur Bewegungsrichtung des magnetischen Aufzeichnungsträgers (2) vorgesehen ist und der Magnetkopf (1) mindestens einen Hilfslesekopf (6, 61, 62) enthält, dadurch gekennzeichnet, daß der Hilfslesekopf (6, 61, 62) in einem vorgegebenen, festen Abstand (7) senkrecht zur Bewegungsrichtung des Aufzeichnungsträgers (2) angeordnet ist und daß die Steuereinheit (26) derart ausgebildet ist, daß sie den Magnetkopf (1) so steuert, daß der Hilfslesekopf (6, 61, 62) in einem ersten Durchlauf des Aufzeichnungsträgers (2) eine erste Bezugsspur (5) abtastet, die Information über die Kante des Aufzeichnungsträgers (2) enthält und während jedes weiteren Durchlaufes eine Bezugsspur (8) abtastet, die Datensignale enthält, und der Hilfslesekopf den Bezugsspuren während der Bewegung des Aufzeichnungsträgers folgt, wobei gleichzeitig die Datensignale auf dem Aufzeichnungsträger (2) aufgezeichnet werden oder von diesem wiedergegeben werden.

6. Anordnung nach Anspruch 5, dadurch gekennzeichnet, daß der kombinierte Magnetkopf (1) einen Hilfslesekopf (6) aufweist, der einen Rand der jeweiligen Bezugsspur (5, 8) abtastet.

7. Anordnung nach Anspruch 5 oder 6, dadurch gekennzeichnet, daß der Hilfslesekopf senkrecht zur Bewegungsrichtung des Aufzeichnungsträgers (2) eine Breite aufweist, die wesentlich geringer ist als die Breite des Lesekopfes (4).

8. Anordnung nach einem der Ansprüche 5 bis 7, dadurch gekennzeichnet, daß der kombinierte Magnetkopf (1) zwei Hilfsleseköpfe (6, 61) aufweist, mittels derer beide Ränder einer jeweiligen Bezugsspur (8) abtastbar sind.

9. Anordnung nach einem der Ansprüche 5 bis 8, dadurch gekennzeichnet, daß der kombinierte Magnetkopf (1) eine Mehrzahl von Schreibköpfen (2, 32), eine Mehrzahl von Hilfsleseköpfen (6, 61, 62) und eine Mehrzahl von Leseköpfen (4, 41, 42) aufweist.

10. Anordnung nach einem der Ansprüche 5 bis 9, dadurch gekennzeichnet, daß als Aufzeichnungsträger ein Magnetband (2) vorgesehen ist.

11. Anordnung nach einem der Ansprüche 5 bis 10, dadurch gekennzeichnet, daß als Steuereinheit (26) ein Mikrorechner vorgesehen ist.

## Claims

1. A method of positioning a combined magnetic head (1) of a magnetic-coating storage device in a direction perpendicular to the direction of movement of a magnetic recording support (2), the magnetic head comprising at least one write head (3) for recording data signals on the recording support and at least one read head (4) for reproducing stored data signals, characterised by the following steps:
a) the magnetic head (1) is so positioned that at least one auxiliary read head (6) which, relatively to the write head (3) and/or to the read head (4), is disposed at a fixed distance (7) perpendicularly to the direction of movement of the recording medium (2), scans one reference track (5, 8) in each case and follows it during the movement of the recording medium (2),
b) during the movement of the recording medium (2), the data signals are recorded by the write head (3) or reproduced by the read head (4), the track used as reference track (5) during the first pass being a track which contains information concerning the edge of the recording medium (2) while during further passes the reference track (8) used on the recording medium (2) is one which has recorded data signals.

2. A method according to claim 1, characterised in that an edge of the reference track (5, 8) is scanned by means of the auxiliary read head (6).

3. A method according to claim 1 or 2, characterised in that the other edge of the reference track (8) is scanned by means of another auxiliary read head (61).

4. A method according to any one of claims 1 to 3, characterised in that the magnetic-coating storage device used is a magnetic tape recorder and the recording medium used is a magnetic tape (2).

5. An arrangement for performing the method according to any one of claims 1 to 4, wherein a control unit (26) for positioning the combined magnetic head (1) perpendicularly to the direction of movement of the magnetic recording medium (2) is provided in the magnetic-coating storage device and the magnetic head (1) comprises at least one auxiliary read head (6, 61, 62), characterised in that the auxiliary read head (6, 61, 62) is disposed at a predetermined fixed distance (7) perpendicularly to the direction of movement of the recording medium (2) and in that the control unit (26) is so constructed as so to control the magnetic head (1) that the auxiliary read head (6, 61, 62), in a first pass of the recording medium (2), scans a first reference track (5) which contains information concerning the edge of the recording medium (2) and, during each further pass, scans a reference track (8) which contains data signals, and the auxiliary read head follows the reference tracks during the movement of the recording medium, while at the same time the data signals are recorded on the recording medium (2) or read therefrom.

6. An arrangement according to claim 5, characterised in that the combined magnetic head (1) comprises an auxiliary read head (6) which scans an edge of the associated reference track (5, 8).

7. An arrangement according to claim 5 or 6, characterised in that the auxiliary read head width perpendicularly to the direction of movement of the recording medium (2) is much less than the width of the read head (4).

8. An arrangement according to any one of claims 5 to 7, characterised in that the combined magnetic head (1) comprises two auxiliary read heads (6, 61) by means of which both edges of an associated reference track (8) can be scanned.

9. An arrangement according to any one of claims 5 to 8, characterised in that the combined magnetic head (1) comprises a plurality of write heads (2, 32), a plurality of auxiliary read heads (6, 61, 62) and a plurality of read heads (4, 41, 42).

10. An arrangement according to any one of claims 5 to 9, characterised in that the recording medium is a magnetic tape (2).

11. An arrangement according to any one of claims 5 to 10, characterised in that the control unit (26) is a microcomputer.

## Revendications

1. Procédé de positionnement d'une tête magnétique combinée (1) d'un enregistreur à couche magnétique dans la direction pependiculaire à la direction de mouvement d'un support magnétique d'enregistrement (2), la tête magnétique contenant au moins une tête d'écriture (3) pour l'enregistrement de signaux de données sur le support d'enregistrement et au moins une tête de lecture (4) pour la lecture de signaux de données enregistrés, caractérisé par les opérations suivantes:
a) la tête magnétique (1) est positionnée de façon telle qu'au moins une tête de lecture auxiliaire (6) placée à une distance fixe (7) de la tête d'écriture (3) et/ou de la tête de lecture (4) perpendiculairement à la direction de mouvement du support d'enregistrement (2) balaye chaque fois une piste de référence (5,8) et suive celle-ci pendant le mouvement du support d'enregistrement (2),
b) pendant le mouvement du support d'enregistrement (2), les signaux de données sont enregistrés au moyen de la tête d'écriture (3) ou lus au moyen de la tête de lecture (4), au premier passage étant utilisée comme piste de référence (5) une piste qui contient une information relative au bord du support d'enregistrement (2), et aux passages suivants étant utilisée comme piste de référence (8) sur le support d'enregistrement (2) une piste portant des signaux de données enregistrés.

2. Procédé selon la revendication 1, caractérisé par le fait qu'au moyen de la tête de lecture auxiliaire (6) est balayé un bord de la piste de référence (5,8).

3. Procédé selon l'une des revendications 1 et 2 caractérisé par le fait que l'autre bord de la piste de référence (8) est balayé au moyen d'une autre tête de lecture auxiliaire (61).

4. Procédé selon l'une des revendications 1 à 3, caractérisé par le fait que, comme enregistreur à couche magnétique, est utilisé un enregistreur à bande magnétique et, comme support d'enregistrement, est utilisée une bande magnétique (2).

5. Dispositif pour la mise en oeuvre du procédé selon l'une des revendications 1 à 4, où, dans l'enregistreur à couche magnétique, est prévu un bloc de commande (26) pour le positionnement de la tête magnétique combinée (1) perpendiculairement à la direction de mouvement du support magnétique d'enregistrement (2) et la tête magnétique (1) contient au moins une tête de lecture auxiliaire (6,61,62), caractérisé par le fait que la tête de lecture auxiliaire (6,61,62) est placée à une distance fixe fixée (7) perpendiculairement à la direction de mouvement du support d'enregistrement (2) et que le bloc de commande (26) est agencé pour piloter la tête magnétique (1) de façon que la tête de lecture auxiliaire (6,61,62), dans un premier passage du support d'enregistrement (2), balaye une première piste de référence (5) qui contient une information relative au bord du support d'enregistrement (2) et, pendant chaque passage suivant, balaye une piste de référence (8) qui contient des signaux de données, et la tête de lecture auxiliaire suive les pistes de référence pendant le mouvement du support d'enregistrement, les signaux de données étant en même temps enregistrés ou lus sur celui-ci.

6. Dispositif selon la revendication 5, caractérisé par le fait que la tête magnétique combinée (1) présente une tête de lecture auxiliaire (6) qui balaye un bord de la piste de référence (5,8).

7. Dispositif selon l'une des revendications 5 et 6, caractérisé par le fait que la tête de lecture auxiliaire a, perpendiculairement à la direction de mouvement du support d'enregistrement (2), une largeur nettement inférieure à celle de la tête de lecture (4).

8. Dispositif selon l'une des revendications 5 à 7, caractérisé par le fait que la tête magnétique combinée (1) présente deux têtes de lecture auxiliaires (6,61) au moyen desquelles peuvent être balayés les deux bords d'une piste de référence (8).

9. Dispositif selon l'une des revendications 5 à 8, caractérisé par le fait que la tête magnétique combinée (1) présente plusieurs têtes d'écriture (3,32), plusieurs têtes de lecture auxiliaires (6,61,62) et plusieurs têtes de lecture (4,41,42).

10. Dispositif selon l'une des revendications 5 à 9, caractérisé par le fait que, comme support d'enregistrement, est prévue une bande magnétique (2).

11. Dispositif selon l'une des revendications 5 à 10, caractérisé par le fait que, comme bloc de commande (26), est prévu un micro-ordinateur.
